# EUROPEAN PATENT APPLICATION

(11) **EP 4 715 201 A1**
(43) Date of publication of application: **25.03.2026**
(21) Application number: 24200964.5
(22) Date of filing: 18.09.2024
(51) Int. Cl.: F03D 17/00

(54) **ROTOR AZIMUTH ESTIMATOR**

(71) Applicant: Siemens Gamesa Renewable Energy A/S, 7330 Brande (DK)
(72) Inventor: Brill, Anthony, Longmont, 80504 (US); Pierce, Kirk, Lafayette, 80026 (US)
(74) Representative: SGRE-Association

(57) **Abstract**

The invention describes an azimuth estimator (1) for computing an estimate (αe) of the azimuth angle (20α) of the aerodynamic rotor (20) of a wind turbine (2), which azimuth estimator (1) comprises an input for receiving measurement values (270) of the rotational speed (20ω) of the aerodynamic rotor (20); an azimuth change computation module (10) for computing an azimuth angle change (100) on the basis of the measured rotor speed (270); and a summation unit (11, 13) configured to add at least the azimuth angle change (100) and a previously determined azimuth estimate (αeₚᵣₑᵥ) to obtain an azimuth estimate (αe). The invention further describes a method of computing an estimate (αe) of the azimuth angle (20α) of the aerodynamic rotor (20) of a wind turbine (2).

## Description

### Background

The aerodynamic rotor of a horizontal-axis wind turbine generally comprises three rotor blades mounted to a hub at the front of a nacelle or canopy. Accurate information about the position of each rotor blade is important for various aspects of wind turbine control, since the wind loads acting on a rotor blade can vary significantly according to its position. For example, wind shear can result in higher wind loads on a rotor blade that is pointing upwards than on a rotor blade passing through the lower quadrants of the rotor swept area. To avoid strain from excessive wind loads, the wind turbine controller may individually pitch the rotor blades according to their position. At high wind speeds for example, a rotor blade moving through the upper range of the rotor swept area may be pitched out of the wind to avoid wind shear loads; a rotor blade passing in front of the tower be pitched out of the wind pre-emptively to avoid a tip-tower collision. Equally, to extract as much energy from the wind, it is important for the wind turbine controller to pitch the rotor blades into the wind whenever possible. Accurate azimuth measurements can also be required for other tasks such as rotor positioning, rotor imbalance monitoring, to avoid collision with an approaching maintenance vessel, an incoming helicopter, etc.

For these reasons, it is known to define the position of each rotor blade in terms of rotor azimuth angle, e.g. in terms of a known reference point on the hub. This reference, which can be a virtual feature or a physical feature, travels through 360° for each complete rotation of the hub. At a rotor azimuth angle of 0°, the reference point is at its highest position (pointing directly upwards); at a rotor azimuth angle of 180°, the reference point is at its lowest position (pointing directly downwards). Since the position of each rotor blade is fixed relative to the hub, the angular position of each rotor blade can be expressed in terms of the rotor azimuth angle. In a common convention, the reference point coincides with a line through the leading edge of a first rotor blade. In this convention, whenever the rotor azimuth angle is 0°, the first rotor blade points vertically upward and - looking towards the hub - the second rotor blade is at the 4 o'clock position while the third rotor blade is at the 8 o'clock position. Similarly, whenever the rotor azimuth angle is 180°, the first rotor blade points vertically downward at the six o'clock position, the second rotor blade is at the ten o'clock position, and the third rotor blade is at the two o'clock position.

During operation of a wind turbine, the rotor azimuth angle can be measured using any suitable type of sensor, for example a pair of accelerometers installed in the hub; a Hall-effect sensor arranged across the gap between the rotary hub and the stationary nacelle, etc.

Since accurate and reliable azimuth information is of critical importance in wind turbine control, it is necessary to be able to determine whether the reported information is indeed correct. To this end, a wind turbine may be equipped with a primary azimuth sensor assembly and one or more secondary or redundant azimuth sensor assemblies. However, equipping a wind turbine with redundant sensor assemblies adds to the overall cost, and it is necessary to perform regular maintenance on all sensor assemblies.

It is therefore an object of the invention to provide an improved way of obtaining reliable azimuth information for a wind turbine controller.

This object is achieved by the claimed azimuth estimator, and by the claimed method of computing an estimate of the azimuth angle of the aerodynamic rotor of a wind turbine.

### Description

The invention can be used in any kind of wind turbine which has an aerodynamic rotor comprising a number of rotor blades mounted to a hub. Such a wind turbine may be assumed to comprise a means of measuring the rotational speed of the aerodynamic rotor, since this information is generally needed by the wind turbine controller for various purposes, for example to regulate the wind turbine's power output.

According to the invention, the azimuth estimator comprises an input for receiving measurement values of the rotational speed of the aerodynamic rotor; an azimuth change computation module for computing the change in azimuth angle on the basis of the measured rotor speed; and a summation unit configured to add at least the azimuth angle change to a previously determined azimuth estimate to obtain a current or updated azimuth estimate.

In the context of the invention, the azimuth estimator shall be understood to be a computer-implemented state observer or state estimator, configured to provide an estimate of rotor azimuth. Since the physical state (the actual rotor azimuth position) cannot be determined by direct observation, an indirect effect of the rotor azimuth - in this case the rotor speed - is observed instead. The measured rotor speed therefore forms the basis from which the change in azimuth angle is computed. Since a parameter such as rotor speed will generally be measured using a sampling technique, numerical integration of the samples can lead to integration drift, and the azimuth estimator can compensate for this by applying an appropriate correction during computation of the azimuth estimate.

An advantage of the inventive azimuth angle estimator is that it provides an accurate and reliable estimate of the azimuth angle, as well as a way of assessing the accuracy of the measured azimuth angle, so that the wind turbine controller can establish whether the reported data can be trusted.

Another advantage of the invention is that it allows wind turbine controller to identify various failure modes of the azimuth measurement arrangement.

The units or modules of the inventive azimuth angle estimator can be completely or partially realised as software modules running on a processor of a wind turbine controller.

The inventive method comprises receiving measurement values of the rotational speed of the aerodynamic rotor; computing an azimuth angle change on the basis of the measured rotor speed; and summing at least the azimuth angle change and a previously determined azimuth estimate to obtain an updated or current azimuth estimate.

According to the invention, a wind turbine comprises an azimuth measurement module configured to measure the azimuth angle of the aerodynamic rotor; a rotor speed computation module configured to measure the rotational speed of the aerodynamic rotor; and an instance of the inventive azimuth estimator for computing an estimate of the azimuth angle of the aerodynamic rotor of the wind turbine. The azimuth estimate obtained in this manner can be assumed to be more accurate and reliable than the azimuth angle measurements, so that wind turbine control tasks that require knowledge of the azimuth position can be performed in a more precise manner.

Particularly advantageous embodiments and features of the invention are given by the dependent claims, as revealed in the following description. Features of different claim categories may be combined as appropriate to give further embodiments not described herein.

The terms "rotor azimuth", "azimuth", "azimuth angle" and "azimuth position" shall be understood to be synonyms and may be used interchangeably herein, and refer to the angular position of the aerodynamic rotor (the hub and its arrangement of rotor blades) relative to a known reference point.

In a preferred embodiment of the invention, the inventive azimuth angle estimator also receives azimuth angle measurements from a suitable sensor assembly (for example a two-axis accelerometer installed in the hub) that is configured to continually measure the azimuth angle, and uses the received azimuth angle measurements and the azimuth angle estimate to determine the azimuth measurement error by subtracting the estimated azimuth from the measured azimuth angle. The azimuth measurement error can be monitored by the wind turbine controller to assess the condition of the sensor assembly, and/or to assess the reliability of the data being delivered by the sensor assembly. Knowledge of the condition of the azimuth measurement sensor(s) can help the wind turbine controller make correct decisions.

The inventive azimuth angle estimator can be used to compute the change in azimuth angle solely on the basis of the measured rotor speed, since this can be assumed to be accurate and reliable. Since it is calculated independently of the measured azimuth angle, the estimated azimuth angle in such an embodiment may "drift" away from the measured azimuth angle. Such drift is the result of the accumulation of small errors in the azimuth estimate arising for example from the technique used to measure the rotor speed. Therefore, in a particularly preferred embodiment of the invention, the method comprises a step of adjusting the estimated azimuth angle by a correction factor derived from the previously computed rotor azimuth error. Preferably, the correction factor comprises a small percentage of the previously computed rotor azimuth error, for example 3% of the previously computed rotor azimuth error. This "small scaling of the azimuth error" ensures that the estimated azimuth angle does not drift away from the true azimuth angle. This approach is preferable since it provides a straightforward way of ensuring that the azimuth estimate tracks the measured azimuth. A further advantage of this embodiment is that the azimuth estimate will include "high-frequency dynamics" because the rotor speed measurements are highly accurate and include even very brief acceleration/deceleration events, i.e. the azimuth estimate incorporates information that is absent from the more crudely measured azimuth. The estimated rotor azimuth can be regarded as a high-resolution value, whereas the measured rotor azimuth can be regarded as a low-resolution value.

The rotor speed measurement module can be realised in any suitable manner, for example as an inertial measurement unit installed in the hub, an encoder at some point along the drivetrain, inductive sensors etc., as will be known to the skilled person. The rotor speed measurement module can be configured to sample one or more variables and to process the variables to obtain a value of aerodynamic rotor speed. The rotor speed determined in this way is output at intervals in the form of a digital signal. Such intervals can correspond to the sampling rate of the measurement module, for example. The intervals at which the rotor speed is measured are referred to herein as time steps. Preferably, the azimuth angle estimate is computed at the same rate. For example, if the sampling rate of the rotor speed measurement module is 50 Hz, an azimuth angle estimate will be computed at 0.02 s intervals. Preferably, the azimuth angle estimator comprises a means of storing the results of each current computation (e.g. the azimuth angle estimate) for use in a subsequent computation (during the next time step).

The measured azimuth only has a small influence on the estimated azimuth, and is only used to ensure that the azimuth estimate does not have a bias. It is the rotor speed measurements that primarily determine the azimuth estimate. The rotor speed measurements include more information, since "higher-frequency" changes in rotor speed and rotor acceleration/deceleration (i.e. changes that occur over very short time intervals) are contained in the rotor speed measurements. All of these higher-frequency dynamics form the basis of the estimated azimuth output. In contrast, the measured azimuth contributes only "low-frequency" changes.

Since the rotor speed measurements are less noisy than the azimuth measurements, provide reliable and accurate data, and capture the rotor dynamics very well, the estimated azimuth as computed by the inventive method is superior to the measured azimuth as provided by the known kinds of sensor arrangement.

The wind turbine can make use of the azimuth estimate in various ways. For example, the wind turbine controller may be configured to compute individual rotor blade pitch references on the basis of the favourably accurate azimuth estimate. Equally, the wind turbine controller can determine a condition of the azimuth measurement module on the basis of the azimuth measurement error.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 and Figure 2 show a conventional wind turbine configuration;
Figure 3 illustrates the relationship between rotor speed and azimuth angle;
Figure 4 is a block diagram of an embodiment of the invention;
Figure 5 is a block diagram of a further embodiment of the invention;
Figures 6 - 8 illustrate failure modes of a conventional azimuth measuring means.

In the diagrams, like numbers refer to like objects throughout. Objects in the diagrams are not necessarily drawn to scale.

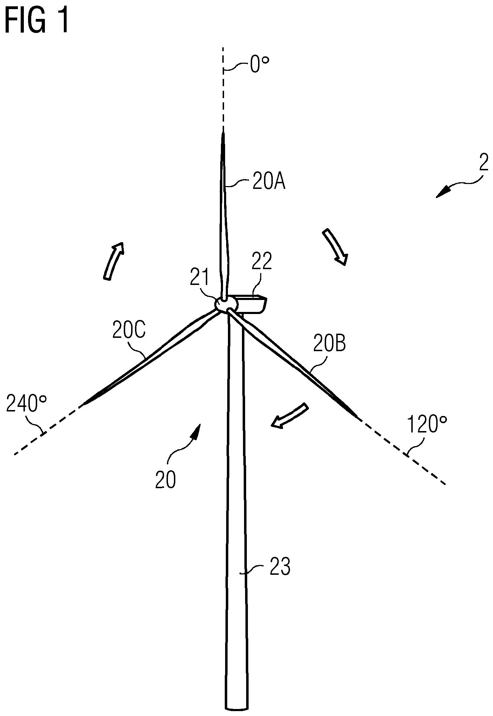

Figure 1 shows a wind turbine 2 with a nacelle 22 mounted on a tower 23, and an aerodynamic rotor 20 at the front of the nacelle 22. The aerodynamic rotor 20 comprises three rotor blades 20A, 20B, 20C mounted to a hub 21. An azimuth angle of the aerodynamic rotor is generally defined relative to a fixed reference, in this case any point on a line extending vertically upward from the centre of the hub 21. The position of this reference point on the hub 21, and the positions of the rotor blades 20A, 20B, 20C on the hub 21, are known to the wind turbine controller. Here, it may be assumed that the reference point aligns with the leading edge of rotor blade 20A. At the instant shown in the drawing, the hub (and rotor blade 20A) is at the 0° azimuth angle, rotor blade 20B is at 120° ("four o'clock"), and rotor blade 20C is at 240° ("eight o'clock).

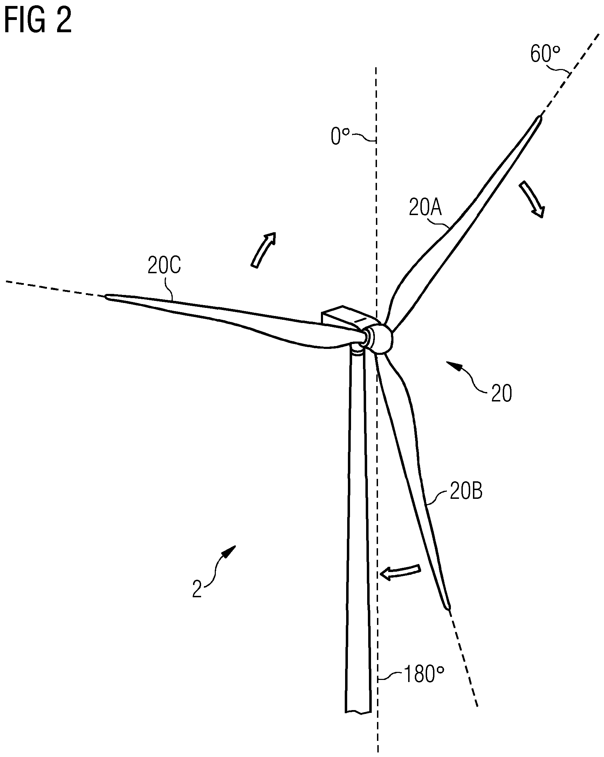

Figure 2 shows the same wind turbine 2 at a later point in time. Here, the hub 21 and rotor blade 20A are approaching the 60° azimuth angle. At the same time, rotor blade 20B is approaching the six o'clock position and rotor blade 20C is approaching the ten o'clock position.

It is very important that the wind turbine controller receives accurate azimuth information. For example, the wind turbine controller may perform individual pitch control of the rotor blades 20A, 20B, 20C so that any rotor blade near its 12 o'clock position is pitched out of the wind to avoid excessive loading from wind shear; and any rotor blade near its six o'clock position is pitched out of the wind to avoid colliding with the tower. At other positions, the rotor blades are pitched into the wind to extract as much energy as possible. In order to achieve these objectives, the wind turbine controller must be able to rely on the azimuth information it receives, i.e. it must at all times be aware of the azimuth angle of the aerodynamic rotor 20.

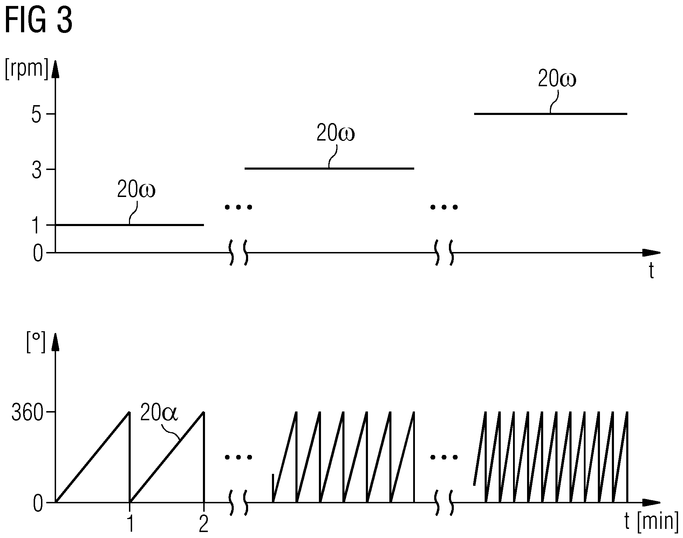

Figure 3 shows the speed 20ω (indicated in rpm) and azimuth angle 20α (in degrees) of the aerodynamic rotor 20 for a wind turbine 2 as shown in Figures 1 and 2, over an interval of time. In this simplified example, the rotor 20 initially turns at a rate of 1 rpm, so that a complete rotation of the hub 21 through 360° takes 60 seconds. The rotor speed 20ω increases to 3 rpm, and a complete rotation of the hub 21 through 360° then takes only 20 seconds. At a rotor speed 20ω of 5 rpm, a complete rotation of the hub 21 through 360° takes only 12 seconds. At high wind speeds and a correspondingly high rotor speed 20ω, it becomes very important to correctly track the rotor azimuth 20α, for example in order to increase/decrease the pitch angles of the rotor blades 20A, 20B, 20C at precisely the correct times to avoid excessive loading of a rotor blade near its 0° azimuth angle, to avoid tip collisions of a rotor blade near its 180° azimuth angle, and to extract as much energy as possible from the wind at other positions. However, an azimuth angle as measured by a sensor assembly may differ from the actual azimuth angle 20α.

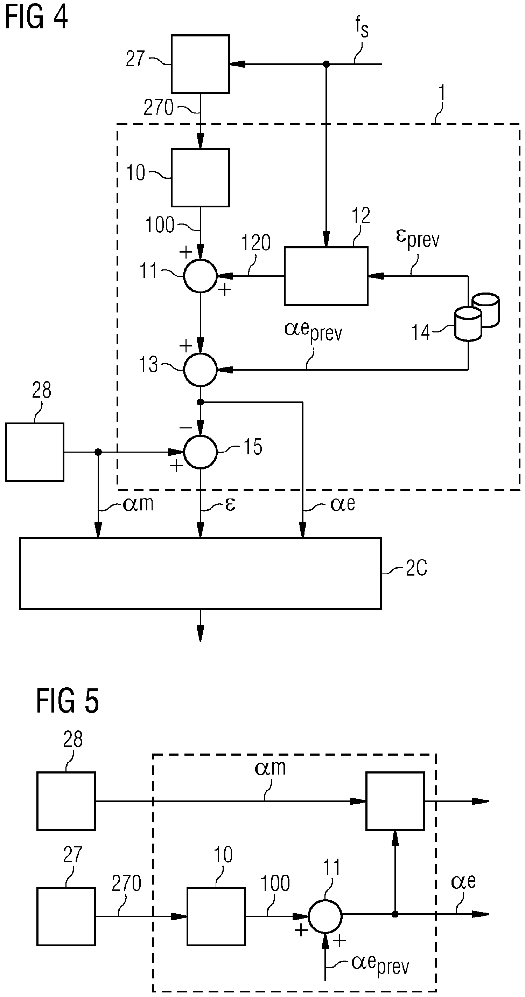

Figure 4 is a block diagram of the inventive azimuth estimator 1. The azimuth angle estimator 1 can be realised as part of a wind turbine controller for a wind turbine 2 shown above, and computes the rotor azimuth estimate αe and rotor azimuth error ε. The estimated rotor azimuth αe as computed by the inventive azimuth angle estimator 1 is more accurate than a measured rotor azimuth αm, and the estimated azimuth αe can therefore be used by critical wind turbine control modules, for example to perform accurate individual rotor blade pitching.

The azimuth angle estimator 1 receives an azimuth angle measurement αm from an azimuth measurement sensor 28, and a rotor speed measurement 270 from a rotor speed measurement module 27. The rotor azimuth estimate αe and rotor azimuth error ε can be computed at regular time steps corresponding to the sampling rate fₛ of the rotor speed measurement module 27, for example every 0.02 seconds.

The azimuth measurement sensor 28 can be realised using any suitable sensor assembly arranged in the hub 21, for example a pair of accelerometers. The rotor speed measurement module 27 may be realised using any suitable sensor assembly arranged in the hub 21, for example an inertial measurement unit. The measured rotor speed 270, which may be assumed to be a sequence of reliable and accurate samples obtained at a suitable sampling rate, is used to calculate a rotor azimuth estimate αe. Both rotor azimuth values αe, αm are expressed relative to the same reference point, for example a known physical point on the outer circumference of the hub 21.

In this exemplary embodiment, the difference between the rotor azimuth measurement αm and the rotor azimuth estimate αe, i.e. the rotor azimuth error ε, is used to update the rotor azimuth estimate αe in the next time step as follows:
The measured rotor speed 270 is processed in a computation module 10 which uses it to estimate the azimuth change 100 at intervals corresponding to the sampling rate of the rotor speed measurement module 27. In a phase compensation module 12, small scaling is applied to the azimuth error εₚᵣₑᵥ of the previous time step to compute a phase correction 120. The rotor azimuth estimate αe is then updated by adding the azimuth position change 100 and phase correction 120 to the azimuth estimate αeₚᵣₑᵥ of the previous time step. The updated rotor azimuth estimate αe and the updated azimuth error ε of the current time step are stored for use in the subsequent time step, as indicated by memory 14.

In an exemplary scenario, the azimuth error εₚᵣₑᵥ and azimuth estimate αeₚᵣₑᵥ of the previous time step are 0.03° and 0.9° respectively. The rotor speed 270 is 1 rpm and is measured at a sampling rate of 50 Hz. The estimated azimuth change 100 since the previous time step is therefore 0.12° (6°s⁻¹ x 0.02 s). The phase compensation module 12 applies a small-scale phase compensation gain of 5% to the azimuth error εₚᵣₑᵥ of the previous time step, resulting in a phase correction 120 of 0.0015° (0.05 x 0.03°). The rotor azimuth estimate αe of the current time step is obtained by summing the estimated azimuth change 100, the phase correction 120 and the azimuth estimate αeₚᵣₑᵥ of the previous time step (indicated by summation units 11, 13, 15), resulting in a value of 1.035° (0.9° + 0.12° + 0.0015°) for the current rotor azimuth estimate αe.

The rotor azimuth error ε can be monitored by the wind turbine controller 2C. As long as the rotor azimuth error ε remains essentially constant and within an acceptable tolerance, wind turbine control can continue. If the rotor azimuth error ε changes significantly, this can be interpreted as an indication of a severe problem and the wind turbine controller 2C can act accordingly by issuing appropriate commands/references.

Figure 5 shows an alternative embodiment of the inventive azimuth estimator 1, in this case configured to receive rotor speed measurements 270. Here also, the azimuth estimator 1 comprises an azimuth change estimation module 10 as explained in Figure 4, but the rotor azimuth estimate αe is simply computed by estimating the azimuth change 100 from the accurately measured rotor speed 270. Even though the azimuth estimate αe will eventually "drift" from the azimuth measurement αm, the information thus obtained can be useful for certain purposes, for example if the rotor azimuth estimate αe appears as a well-behaved sawtooth, the wind turbine controller can conclude that the aerodynamic rotor 20 is turning correctly, even if the azimuth measurement αm exhibits outliers or similar discrepancies. Here, a comparison of the shapes of the azimuth values αm, αe can be enough to determine if the measured azimuth αm is acceptably accurate.

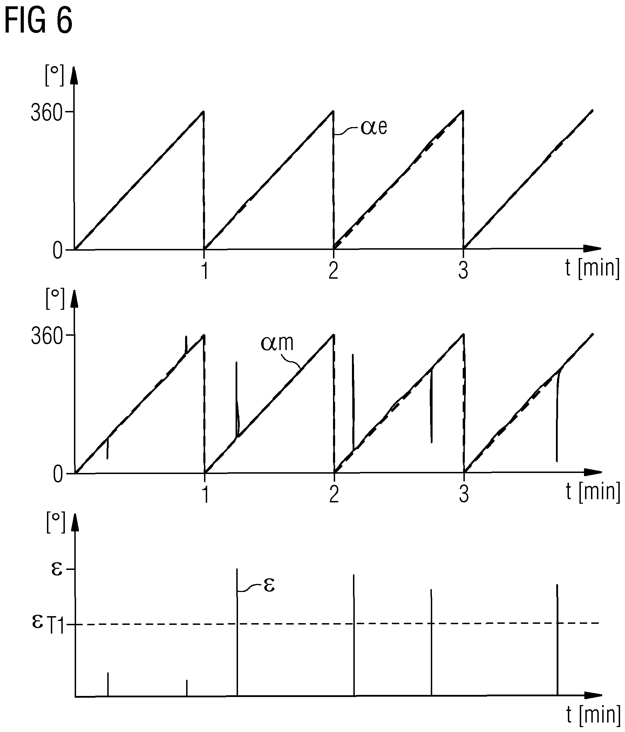

Figures 6 - 8 show various modes of failure of an azimuth sensor 10 of a wind turbine 2 as shown in Figure 1. In each case, an exemplary constant rotor speed of 1 rpm is used to illustrate how each of the various failure modes might manifest. A prior art wind turbine must comprise a redundant azimuth measurement means or some other sensor placed to observe the behaviour of the aerodynamic rotor in order to be able to identify an error state in the azimuth sensor 10; alternatively the wind turbine can detect an error state using an instance of the inventive azimuth estimator.

In Figure 6, the output αm of the azimuth sensor 10 is mostly credible, but the sensor 10 occasionally reports outlier values, glitches or "spikes". The wind turbine controller of a wind turbine which only has only an azimuth sensor 10 may be configured to curtail the wind turbine, i.e. to down-regulate its output power, after receiving one or more outlier measurements that exceed a sample error threshold ε_{T1}. Down-regulation of the output power can continue until a maintenance procedure can be scheduled for the azimuth sensor, incurring significant loss of earnings.

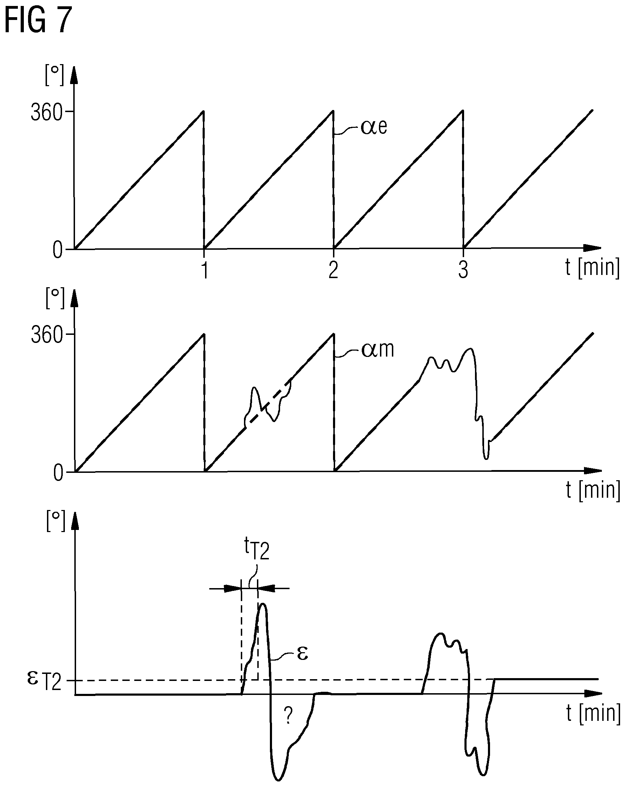

In Figure 7, the output of the azimuth sensor 10 fluctuates as a result of shaking in the hub 21, which can occur under turbulent wind conditions. Here also, a wind turbine controller receiving only azimuth sensor output αm may be configured to curtail the wind turbine after receiving such fluctuating readings that exceed an acceptable error threshold ε_{T2} for longer than a permitted duration t_{T2}.

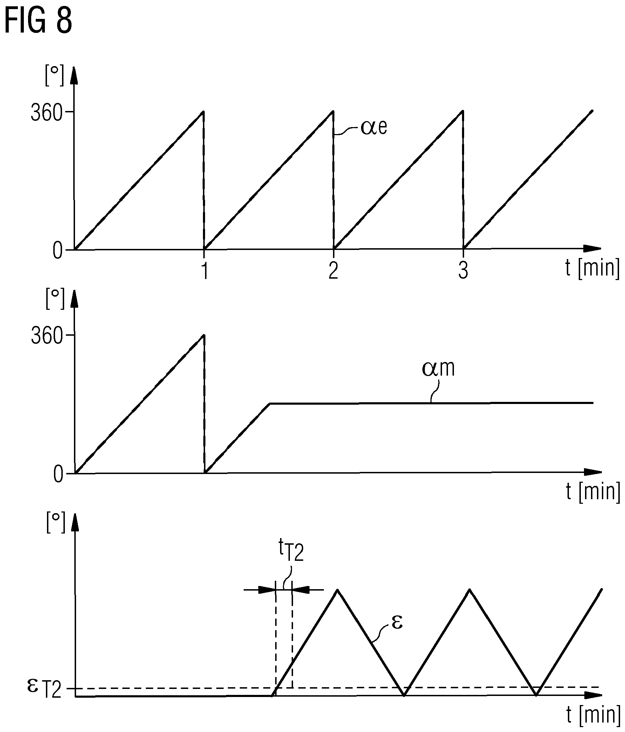

In Figure 8, the output of the azimuth sensor 10 fails at some point and its output remains at the last measured value ("flatline"), and the azimuth error ε quickly exceeds an acceptable error threshold εT1 for longer than a permitted duration t_{T2}. Here also, a wind turbine controller receiving only azimuth sensor output αm would be configured to curtail the wind turbine when its azimuth sensor 10 flatlines.

In each of Figures 6 - 8, when the wind turbine 2 is equipped with an instance of the inventive azimuth angle estimator 1, the wind turbine controller can conclude that the azimuth sensor 10 is defective and that the aerodynamic rotor is behaving correctly, and will not need to curtail the wind turbine. Instead, the wind turbine controller can report the defective azimuth sensor 10 so that a maintenance procedure can be scheduled, without incurring any loss of earnings from unnecessary down-regulation of the output power.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. An azimuth estimator (1) for computing an estimate (αe) of the azimuth angle (20α) of the aerodynamic rotor (20) of a wind turbine (2), which azimuth estimator (1) comprises
- an input for receiving measurement values (270) of the rotational speed (20ω) of the aerodynamic rotor (20);
- an azimuth change computation module (10) for computing an azimuth angle change (100) on the basis of the measured rotor speed (270); and
- a summation unit (11, 13) configured at least to add the azimuth angle change (100) and a previously determined azimuth estimate (αeₚᵣₑᵥ) to obtain an azimuth estimate (αe) .

2. An azimuth estimator according to the preceding claim, further configured to determine the azimuth measurement error (ε).

3. An azimuth estimator according to any of the preceding claims, configured to compute a correction factor (120) based on the previously computed azimuth measurement error (εₚᵣₑᵥ).

4. An azimuth estimator according to the previous claim, wherein the summation unit (11, 13, 15) is further configured to include the correction factor (120) in the azimuth estimate (αe).

5. An azimuth estimator according to any of the preceding claims, comprising a memory (14) for storing the azimuth estimate (αe) and the azimuth measurement error (ε) for use in a subsequent time step.

6. An azimuth estimator according to any of the preceding claims, wherein a time step corresponds to a sampling rate (fₛ) of a rotor speed measurement module (27).

7. A wind turbine (2) comprising
- an aerodynamic rotor (20) comprising a number of rotor blades (20A, 20B, 20C, 21) mounted to a hub (21);
- an azimuth measurement module (28) configured to measure the azimuth angle (20α) of the aerodynamic rotor (20);
- a rotor speed computation module (27) configured to measure the rotational speed (270) of the aerodynamic rotor (20); and
- an azimuth estimator (1) according to any of claims 1 to 6, for computing an estimate (αe) of the azimuth angle (α) of the aerodynamic rotor (20) of the wind turbine (2) .

8. A wind turbine according to the preceding claim, comprising a wind turbine controller (2C) configured to compute rotor blade pitch references on the basis of the azimuth estimate (αe).

9. A wind turbine according to claim 7 or claim 8, configured to determine a condition of the azimuth measurement module (28) on the basis of the azimuth measurement error (ε).

10. A wind turbine according to any of claims 7 to 9, wherein the rotor speed computation module comprises an inertial measurement unit (27) installed in the hub (21).

11. A wind turbine according to any of claims 7 to 10, wherein the azimuth measurement module is realised a two-axis accelerometer (28) installed in the hub (21).

12. A method of computing an estimate (αe) of the azimuth angle (20α) of the aerodynamic rotor (20) of a wind turbine (2), which method comprises
- receiving measurement values (270) of the rotational speed of the aerodynamic rotor (20);
- computing an azimuth angle change (100) on the basis of the measured rotor speed (270); and
- summing at least the azimuth angle change (100) and a previously determined azimuth estimate (αeₚᵣₑᵥ) to obtain the azimuth estimate (αe).

13. A method according to the preceding claim, comprising a step of subtracting the azimuth estimate (αe) from the measured azimuth angle (αm) to determine the azimuth measurement error (ε).

14. A method according to any of the preceding method claims, comprising a step of adjusting the azimuth estimate (αe) by a correction factor (120), which correction factor (120) comprises a percentage of the previously computed rotor azimuth error (εₚᵣₑᵥ), preferably at most 5% of the previously computed rotor azimuth error (εₚᵣₑᵥ).

15. A computer program product for carrying out the steps of the method according to any of claims 11 to 14 when the computer program product is loaded into a memory of a wind turbine controller (2C) of a wind turbine (2) according to any of claims 7 to 11.
